# EUROPEAN PATENT APPLICATION

(11) **EP 4 325 893 A1**
(43) Date of publication of application: **21.02.2024**
(21) Application number: 22190481.6
(22) Date of filing: 16.08.2022
(51) Int. Cl.: H04R 29/00, G08B 3/10, G08B 29/10, G10L 19/018

(54) **MONITORING OF AUDIO PLAYBACK FOR AUTOMOTIVE APPLICATIONS**

(71) Applicant: Aptiv Technologies Limited, St. Michael (BB)
(72) Inventor: TWARDOWSKI, Tomasz, 32-040 Swiatniki Gorne (PL)
(74) Representative: Bardehle Pagenberg Partnerschaft mbB Patentanwälte Rechtsanwälte

(57) **Abstract**

The present invention relates to a system (1) for playback and monitoring of playback of audio signals (8), comprising: an audio signal generating module (2) configured to generate an audio signal (8); an identification signal generating module (3) configured to generate an identification signal (9) associated with the audio signal (8); a combining module (4) configured to combine the audio signal (8) and the identification signal (9) into a combined audio signal (10); a playback module (5) configured to play back a sound based on the combined audio signal (10); and a verifying module (6) configured to process the played back sound in order to verify that the played back sound contains the identification signal (9). The invention also relates to a corresponding method.

## Description

### Technical field

The invention relates to a system and method for the playback and monitoring of playback of audio signals for automotive applications.

### Technical background

In automotive applications audio signals (sometimes called warning chimes) signal safety related events like lane departure, vehicle in blind-spot, pedestrian, etc. The purpose of such audio signals is to warn the driver about safety critical situations so that he/she can perform corresponding counteractions. Therefore, it is important that such audio signals are actually played back as intended and to detect any malfunctioning in the audio chain, be it at the source (e.g. a controller), the amplifier, or the loudspeaker. Accordingly, safety relevant audio signals in automotive applications are governed by the ASIL (Automotive Safety Integrity Level) classification scheme defined by ISO 26262 (Functional Safety for Road Vehicles standard) and are classified as ASIL A.

One measure to increase the reliability of safety relevant audio signals is using separate audio amplifiers and loudspeakers, instead of for example using the amplifiers and loudspeakers of the entertainment system. Moreover, according to the relevant safety standard, the system has to monitor correct operation of ASIL A grade functionality and react in case of failure. Part of this system is the detection of audio signal presence on the output of the amplifier or loudspeaker. In case of a failure, the driver can be warned by other means about the failure and/or the failure can be logged, such that the system may be fixed at the next maintenance.

There are some commonly known solutions for the detection of safety relevant audio signals. According to a first solution, a checksum is computed over the digital loopback of an audio signal and this checksum is compared to an expected value. If the checksums do not match, a failure is detected. The disadvantage of this solution is that it only operates in the digital domain, i.e. before the audio signal is fed to an analog-to-digital converter (ADC) and does not operate on analog signals output by an amplifier or loudspeaker. Therefore, the correct operation of the analog portion of the signal chain cannot be monitored by this method.

According to another method, the output of an amplifier or of a dedicated microphone is monitored and analyzed in time/frequency and the results are compared to the characteristics of the original audio signal. According to yet another method, a cross-correlation between the monitored signal and the original audio signal is computed and compared to a threshold. While those methods cover most or all of the signal chain including the analog portion, they are rather complex because they require an analysis of the signal in the full frequency domain. Moreover, these methods are error prone due to ambient noise and changing signal path conditions (e.g. reflections and absorptions caused by passengers and/or payloads, open/closed windows, etc.).

Therefore, the objective of the present invention is to provide a system and a method that allow for the reliable playback monitoring of audio signals for automotive applications with low complexity.

### Summary of the Invention

This objective is met by the subject matter of the independent claims. Advantageous embodiments are defined in the dependent claims. The system for playback and monitoring of playback of audio signals according to the invention comprises an audio signal generating module configured to generate an audio signal; an identification signal generating module configured to generate an identification signal associated with the audio signal; a combining module configured to combine the audio signal and the identification signal into a combined audio signal; a playback module configured to play back a sound based on the combined audio signal; and a verifying module configured to process the played back sound in order to verify that the played back sound contains the identification signal.

The audio signal generating module generates an audio signal which may be a warning signal such as a warning chime or similar audible sound having the purpose of informing a driver about a safety relevant situation. As such, the audio signal generating module may be triggered by a corresponding controller which has detected the safety relevant situation. The audio signal maybe stored in a memory, e.g. as an audio sample, and the audio signal generating module may read the corresponding memory location to fetch the audio signal. Alternatively, the audio signal may be generated by a corresponding algorithm, such as an audio synthesis algorithm.

The identification signal generating module generates an identification signal that is associated with the audio signal. Preferably, there is a one-to-one correspondence between audio signals and identification signals, i.e. a given identification signal unambiguously identifies an associated audio signal. The identification signal may be stored in a memory and the identification signal generating module may read the corresponding memory location to fetch the identification signal. Alternatively, the audio signal may be generated by a corresponding algorithm.

The combining module combines the audio signal and the identification signal into a combined audio signal. For example, the audio signal and the identification signal may be added or mixed.

Generally, the audio signal generating module, the identification signal generating module and the combining module may be located onboard a vehicle. In this case, the combining module may combine the audio signal provided by the audio signal generating module and the identification signal provided by the identification signal generating module on every playback of the audio signal. Alternatively, the audio signal generating module, the identification signal generating module and the combining module may reproduce a pre-stored sample on every playback of the audio signal. The pre-stored sample may be a combined signal having the identification signal integrated into the audio signal, e.g. added or mixed. Thus, the function of the audio signal generating module, the identification signal generating module and the combining module maybe performed by a single module that reproduces a stored combined signal. Alternatively, the audio signal generating module, the identification signal generating module and the combining module may be located outside of a vehicle and the resulting combined signal may be stored in a vehicle as a pre-stored sample.

The playback module plays back a sound based on the combined audio signal. For example, the playback module may be an amplifier or a loudspeaker inside a vehicle.

The verifying module processes the played back sound and verifies that the played back sound contains the identification signal. To this end, the verifying module may receive the sound played back by the playback module, either by tapping the output of an amplifier or by recording the output of a loudspeaker with a microphone. If verification fails, it is assumed that the audio signal was not correctly played back. This may be caused by an error in the audio chain, e.g. a defect amplifier or loudspeaker. In this case the verifying module may provide a corresponding warning indication as will be explained in more detail below.

Unlike prior art systems, the system according to the invention allows to actively verify that a safety-related audio signal has been played back by checking for the presence of the identification signal which has been overlaid with the audio signal. This minimizes the effects of ambient noise and of changing signal path conditions (e.g. reflections and absorptions caused by passengers and/or payloads, open/closed windows, etc.) and increases the reliability of the monitoring. At the same time, the processing complexity is reduced compared to prior art methods because the decoding of the identification signal can be tailored to the expected and known characteristics of the identification signal such as its frequency and/or signal amplitude. Unlike prior art methods, not the whole signal domain needs to be analyzed but only a portion thereof. For example, as the center frequency of the identification signal is known, the analysis can focus on a narrow band around this frequency instead of analyzing the entire frequency spectrum.

The identification signal generating module may be configured to modulate at least one carrier frequency using a first identification code. The carrier frequency may be modulated in a way that is characteristic for the audio signal, thus uniquely identifying that particular audio signal by means of the first identification code. A modulated carrier frequency will usually result in a frequency band having the carrier frequency as its center frequency. Thus, the verifying module may focus on this frequency band to demodulate the identification signal and to extract the identification code. Frequency-shift keying (FSK) may be used as a modulation method. Frequency-shift keying can be implemented with little efforts and complexity. The same is true for the corresponding demodulation stage in the verifying module.

The verifying module may be configured to demodulate the played back sound using the at least one carrier frequency to extract a second identification code. In this way, demodulating the received sound occurs at the frequency where the identification signal is expected. Considering the received signal in the frequency domain, processing of the entire signal is not necessary, but only in a (narrow) band around the carrier frequency. This reduces complexity also at the demodulation stage which can be implemented with reduced efforts and costs.

The verifying module may be configured to compare the first identification code to the second identification code. If the identification codes match, the verifying module may output a corresponding match signal. If the identification codes do not match, the verifying module may output a corresponding no-match signal. The match and/or no-match signal may be provided to a controller which causes certain actions depending on the type of signal (match or no-match). Instead of comparing complex audio signal properties like in the prior art, the invention allows a simple comparison of codes in order to verify proper playback of safety-related audio signals.

The combining module may be configured to add the audio signal and the identification signal. In this way, the audio signal is provided with an unambiguous identification by a simple addition operation.

Another aspect of the present invention relates to a method for playback and monitoring of playback of audio signals, comprising the steps: generating an audio signal; generating an identification signal associated with the audio signal; combining the audio signal and the identification signal into a combined audio signal; playing back a sound based on the combined audio signal; and processing the played back sound in order to verify that the played back sound contains the identification signal.

If verification fails, it is assumed that the audio signal was not correctly played back. This may be caused by an error in the audio chain, e.g. a defect amplifier or loudspeaker. In this case the verifying module may provide a corresponding warning indication as will be explained in more detail below.

Generally, the steps of generating the audio signal, generating the identification signal, and combining the audio signal and the identification signal into a combined audio signal may performed onboard a vehicle. In this case, the step of combining the audio signal resulting from the step of generating the audio signal and the identification signal resulting from the step of generating the identification signal may be performed on every playback of the audio signal. Alternatively, the step of generating the audio signal, the step of generating the identification signal and the step of combining may be performed as a single step, e.g. by reproducing a pre-stored sample on every playback of the audio signal. The pre-stored sample may be a combined signal having the identification signal integrated into the audio signal, e.g. added or mixed. Alternatively, the steps of generating the audio signal, generating the identification signal and combining the audio signal and the identification signal may be performed outside of a vehicle and the resulting combined signal may be stored in a vehicle as a pre-stored sample.

The step of generating the identification signal may comprise modulating at least one carrier frequency using a first identification code. Frequency-shift keying (FSK) may be used as a modulation method.

The step of verifying may comprise demodulating the played back sound using the at least one carrier frequency to extract a second identification code.

The step of verifying may comprise comparing the first identification code to the second identification code.

The step of combining may comprise adding the audio signal and the identification signal.

Regarding the advantages of the method over the prior art reference is made to the explanations that have been made with respect to the corresponding system. The mentioned advantages apply to the method as well.

For both the system and the method according to the invention the audio signal and the identification signal may differ in frequency and/or the power of the identification signal may be below the power of the audio signal. In particular, the frequency and/or the power of the identification signal may be such that it is inaudible because it is dominated by the audio signal. For example, the audio signal may be located in a lower region of the audible spectrum, e.g. around 1 kHz and the center frequency of the identification signal may be substantially higher, e.g. above 10 kHz. In addition or alternatively, the power of the identification signal may be substantially below the power of the audio signal. For example, the power of the identification signal may be equal or less than -20 dBFS, preferably equal or less than -30 dBFS, most preferably equal or less than -40 dBFS. Due to the substantially different frequencies and/or powers of the audio signal and the identification signal, the identification signal is not recognizable by the human ear. However, the power of the identification signal will still be sufficient to be received and processed by the verifying module or in the verifying step to verify the presence of the identification signal.

For both the system and the method according to the invention the identification signal may be preceded by a preamble and/or succeeded by a postamble. A preamble and a postamble help locating the identification signal in the received sound signal. In particular, if the identification signal is based on an identification code, a preamble or postamble helps to locate the start and/or end of the identification code.

For both the system and the method according to the invention one or more redundant bits may be added to the first identification code. Redundancy allows to correct reception errors caused for example by ambient noise. For example, one or more parity bits may be added to the first identification code. Redundancy increases the reliability of the audio signal detection.

For both the system and the method according to the invention a warning indication may be provided if the verification that the played back sound contains the identification signal fails. The verifying module may be configured to provide the warning indication. The warning indication may be provided to a driver of a vehicle. For example, an optical and/or acoustical signal may be provided. The acoustical signal may be provided via an alternative signal path different from the signal path used for the combined audio signal. Alternatively, or in addition, the warning indication may be logged. For example, the warning indication may be stored in a memory of the vehicle for diagnostic purposes. Corresponding maintenance may then be done. The occurrence of the warning indication may be logged together with a timestamp and/or other information.

For both the system and the method according to the invention FSK may be used with two carriers above 10 kHz. 10 kHz is substantially above the usual frequencies of audio signals or chimes used in automotive applications. As there is virtually no overlap between the frequencies of the audio signal and the carrier frequencies, the level or power of the carriers can be substantially reduced below an inaudible level.

Another aspect of the invention relates to a computer program comprising computer executable instructions which, when executed by a computer, cause the computer to perform a method as previously described. Thus, what has been said about the method is valid for the computer program as well.

### Brief Description of the Figures

Possible embodiments of the invention are described in more detail in the following detailed description with reference to the following figures.
- Fig. 1:: An exemplary embodiment of a system according to the invention;
- Fig. 2:: A time-frequency diagram showing the frequency spectrum of a combined signal containing an audio signal and an identification signal;
- Fig. 3A:: The basic principle of marking an audio signal according to an exemplary embodiment of the invention;
- Fig. 3B:: The basic principle of playback verification according to an exemplary embodiment of the invention; and
- Fig. 4:: An exemplary embodiment of a method according to the invention.

### Detailed Description of Possible Embodiments

For the sake of brevity, only a few embodiments will be described below. The person skilled in the art will recognize that the features described with reference to these specific embodiments may be modified and combined in different ways and that individual features may also be omitted. The general explanations in the sections above also apply to the more detailed explanations below.

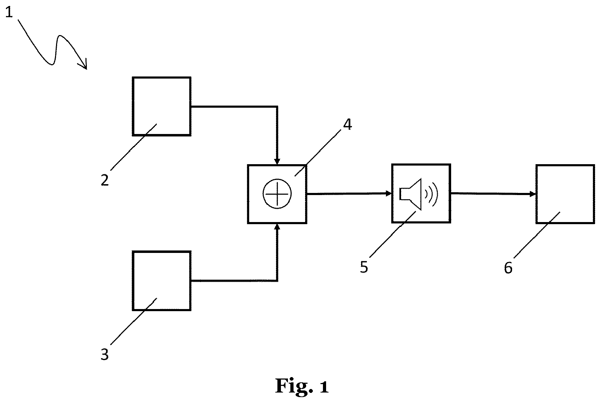

Fig. 1 illustrates an exemplary embodiment of a system 1 according to the invention for playback and monitoring of playback of audio signals for automotive applications. The system 1 comprises audio signal generating module 2 configured to generate an audio signal. An audio signal in the context of the invention may be any signal that can be perceived by a human being by means of his/her ear and may be a warning signal such as a warning chime or similar audible sound having the purpose of informing a driver of a vehicle about a safety relevant situation. Examples include lane departure, vehicle in blind-spot, pedestrian to name a few. As such, the audio signal generating module 2 may be triggered by a corresponding controller of the vehicle which has detected the safety relevant situation. The audio signal may be stored in a memory, e.g. as an audio sample, and the audio signal generating module 2 may read the corresponding memory location to fetch the audio signal. Alternatively, the audio signal may be generated by a corresponding algorithm, such as an audio synthesis algorithm, running for example on a central processing unit (CPU), microcontroller, digital signal processor (DSP) or similar device.

The system 1 also comprises an identification signal generating module 3 which generates an identification signal that is associated with the audio signal. Preferably, there is a one-to-one correspondence between audio signals and identification signals, i.e. a given identification signal unambiguously identifies an associated audio signal. The identification signal may be stored in a memory and the identification signal generating module 3 may read the corresponding memory location to fetch the identification signal. Alternatively, the audio signal may be generated by a corresponding algorithm running for example on a central processing unit (CPU), microcontroller, digital signal processor (DSP) or similar device.

The system 1 also comprises a combining module 4 which combines the audio signal and the identification signal into a combined audio signal. For example, the audio signal and the identification signal may be added or mixed. Combining may be done by digital means or by analog means. If done by analog means, the audio signal and the identification signal may be transformed from digital to analog by a digital-to-analog converter (DAC) before being combined.

The system 1 also comprises a playback module 5 which plays back a sound based on the combined audio signal. For example, the playback module 5 may comprise an amplifier and a loudspeaker. If the combined signal is present as a digital signal, the playback module 5 may also comprise a digital-to-analog converter (DAC). In this case, the combined signal is fed to the DAC which outputs an analog signal corresponding to the digital combined signal. This analog signal is then fed to an amplifier which amplifies the signal and drives a loudspeaker which plays back the combined signal as an audible sound.

The system 1 comprises a verifying module 6 which verifies that the played back sound contains the identification signal. To this end, the verifying module 6 receives the sound played back by the playback module, either by tapping the output of the amplifier or by recording the output of the loudspeaker with a microphone. In the first case, there is an electrical connection between the output of the amplifier and the verifying module 6. In the second case, there may be no electrical connection between the play back module and the verifying module. In fact, the verifying module 6 could be electrically and/or physically separated from the playback module 5.

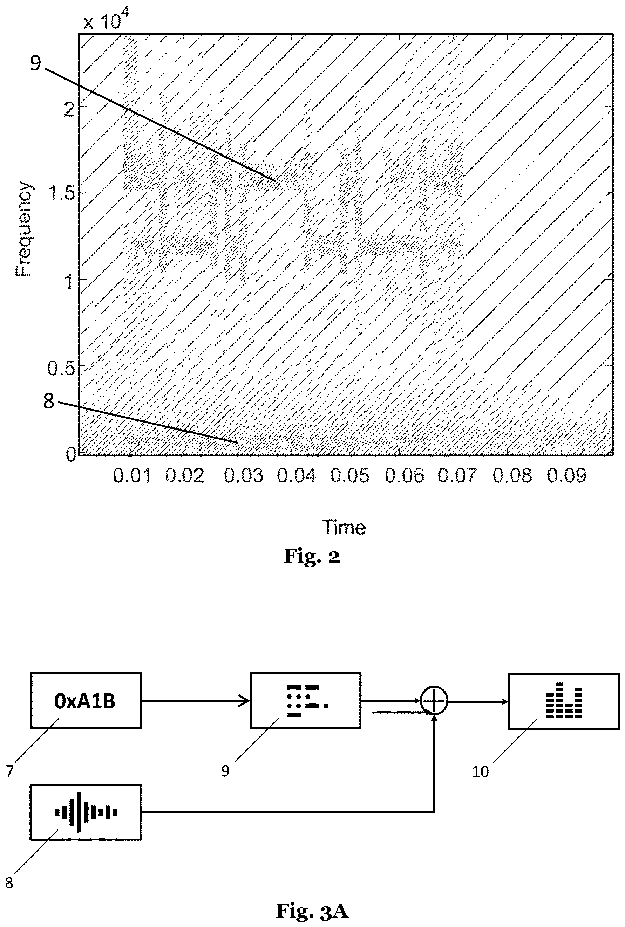

In any case, the verifying module 6 verifies that the identification signal is present in the signal received (either from the amplifier or a from a microphone). In a preferred embodiment frequency-shift keying (FSK) is used for this purpose as will be explained in more detail with respect to Fig. 2, but other modulation methods may be used in the context of the present invention. In this example, a unique identification code is assigned to each possible audio signal or chime. As an example, an 8-bit code may be used which is sufficient for identifying 256 possible audio signals. One or more redundant bits may be added to increase the reliability of the system. For example, four parity bits may be added to the eight bits of the identification code. The identification code is then mapped to an identification signal using frequency shift keying. In the example of Fig. 2, two carrier frequencies are used, namely 12 kHz and 16 kHz, but other frequencies maybe used as well.

If the verifying module 6 does not verify that the played back sound contains the identification signal a warning indication may be provided. The warning indication may be provided to a driver of a vehicle. For example, an optical and/or acoustical signal may be provided. An optical signal may be provided by a lamp or LED or a display in the dash board. The acoustical signal may be provided via an alternative signal path different from the signal path used for the combined audio signal. For example, n additional amplifier and/or speaker may be used. Alternatively or in addition, the warning indication may be logged. For example, the warning indication may be stored in a memory such as a nonvolatile memory of the vehicle for diagnostic purposes. Corresponding maintenance may then be done. The occurrence of the warning indication may be logged together with a timestamp and/or other information relating to the circumstances under which the warning indication occurred.

Fig. 3A illustrates the basic principle of marking an audio signal underlying the exemplary embodiment of the invention. A unique code 7 is associated with an audio signal or chime 8. The code is then subject to a FSK modulation resulting in an identification signal 9 which is added to the audio signal 8 resulting in a combined signal 10. In this way the audio signal 8 is uniquely marked by the identification code 7.

Coming back to Fig. 2 which is a time-frequency diagram showing the frequency spectrum of the combined signal 10 containing the audio signal 8 and the identification signal 9 over time, the original audio signal 8 is shown in the lower portion of the frequency spectrum around 1 kHz. In Fig. 2 different power levels are indicated by different hatchings, wherein higher power levels are shown with smaller line spacing and lower power levels are shown with greater line spacing. The FSK-modulated identification signal 9 is shown in the middle/upper portion of the spectrum. The two carrier frequencies of 12 kHz and 16 kHz are clearly visible as is a characteristic modulation pattern corresponding to the 12-bit code (eight bits of the identification code plus four parity bits). In the example, the identification code is 0xA1 in hexadecimal notation and the parity portion is 0xB. Thus, the FSK-modulated portion 9 of the combined signal 10 corresponds to the code 0xA1B in hexadecimal notation. The symbol period in the example of Fig. 2 is 3 msec. The code is preceded by a preamble and succeeded by a postamble to help detection of the code. In the example of Fig. 2, the preamble and the postamble have a duration of four symbols each. Thus, the entire modulated code has a duration of 20 symbols, i.e. 60 msec.

As can also be seen, the amplitude or power of the modulated identification code (plus parity and pre-/postamble) is substantially below the amplitude or power of the associated audio signal. The carrier level of the FSK carriers in this example is -40 dBFS (Decibels relative to full scale), but other levels may be used in the context of the present invention.

The code is demodulated in the verifying module 6 which contains a corresponding FSK demodulation stage. For example, three cascaded first-order complex quadrature filters can be used to demodulate the identification signal 9 and to extract the identification code. Of course, in case of a different modulation method, the demodulation stage may use the different modulation method and may be configured correspondingly. The extracted code is then compared by the verifying module 6 to the expected identification code, which is 0xA1 in this example after removal of the redundancy bits. If this code is confirmed, the verifying module concludes that the audio signal 8 has been properly played back, such that it could be perceived by the driver. If the extracted code does not match the expected code, the verifying module concludes that the audio signal 8 was not properly played back and could not be perceived by the driver.

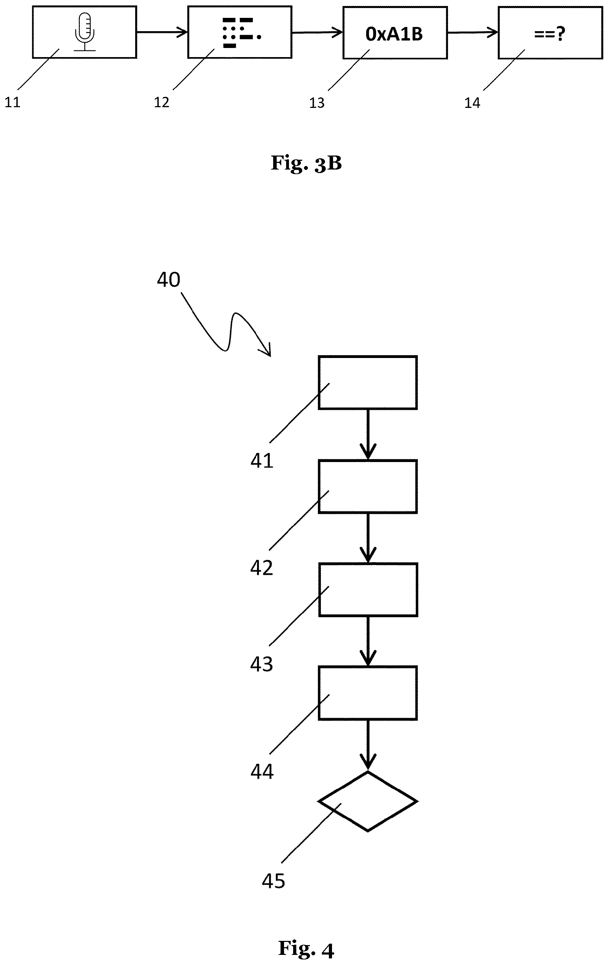

The basic principle of playback verification according to the exemplary embodiment of the invention is illustrated in Fig. 3B which is complementary to Fig. 3A. The played back sound is either tapped at the output of an amplifier or recorded by a microphone at step 11. The received sound is then fed to an analog-to-digital converter (ADC, not shown in Fig. 3B) which in this example operates at a sampling frequency of 48 kHz. Other sampling frequencies could be used in the context of the present invention. At step 12 a FSK demodulation stage demodulates the identification code portion of the sound signal to extract (at step 13) the identification code 7 that was previously associated with the audio signal 8. Finally, at step 14, the extracted identification code is compared to the unique expected identification code 7 previously associated with the audio signal 8. If the codes match, the audio signal 8 has been properly played. If the codes do not match, the audio signal 8 has not been properly played and corresponding measures are taken.

Fig. 4 illustrates an exemplary embodiment of a method 40 according to the invention. The method comprises a step 41 of generating an audio signal 8 as previously explained with respect to the generating module 2, a step 42 of generating an identification signal 9 associated with the audio signal as previously explained with respect to the generating module 3, a step 43 of combining the audio signal 8 and the identification signal 9 into a combined audio signal 10 as previously explained with respect to the identifying module 4, a step 44 of playing back a sound based on the combined audio signal 10 as previously explained with respect to the playback module 5, and a step 45 of verifying that the played back sound contains the identification signal 9 as previously explained with respect to the verifying module 6.

The system 1 and the method 40 may be implemented in hardware or in software, or may be implemented partly in hardware and partly in software. Hardware suitable for implementing a system and a method according to the present include a central processing unit (CPU), a microcontroller, a digital signal processor (DSP), an application-specific integrated circuit (ASIC) or the like. A (full or partial) software implementation may include compiling source code to obtain machine readable instructions which, when executed, cause a computer, CPU, DSP, microcontroller or the like to perform all or part of the functions of the modules described above or to perform all or part of the method steps described above.

### List of reference numerals

- 1: System
- 2: Audio signal generating module
- 3: Identification signal generating module
- 4: Combining module
- 5: Playback module
- 6: Verifying module
- 7: Identification code
- 8: Audio signal
- 9: Identification signal
- 10: Combined audio signal
- 11: Receiving step
- 12: Demodulation step
- 13: Identification code extraction step
- 14: Comparing step
- 40: Method
- 41: Audio signal generating step
- 42: Identification signal generating step
- 43: Combing step
- 44: Playback step
- 45: Verifying step

## Claims

1. A system (1) for playback and monitoring of playback of audio signals (8), comprising:
audio signal generating module (2) configured to generate an audio signal (8);
identification signal generating module (3) configured to generate an identification signal (9) associated with the audio signal (8);
combining module (4) configured to combine the audio signal (8) and the identification signal (9) into a combined audio signal (10);
playback module (5) configured to play back a sound based on the combined audio signal (10); and
verifying module (6) configured to process the played back sound in order to verify that the played back sound contains the identification signal (9).

2. System (1) of claim 1, wherein the identification signal generating module (3) is configured to modulate at least one carrier frequency using a first identification code (7).

3. System (1) of claim 2, wherein the verifying module (6) is configured to demodulate the played back sound using the at least one carrier frequency to extract a second identification code.

4. System (1) of claim 3, wherein the verifying module (6) is configured to compare the first identification code (7) to the second identification code.

5. System (1) of one of claims 1-4, wherein the combining module (5) is configured to add the audio signal (8) and the identification signal (9).

6. A method (40) for playback and monitoring of playback of audio signals (8), comprising the steps:
generating (41) an audio signal (8);
generating (42) an identification signal (9) associated with the audio signal (8);
combining (43) the audio signal (8) and the identification signal (9) into a combined audio signal (10);
playing back (44) a sound based on the combined audio signal (10); and processing the played back sound in order to verify (45) that the played back sound contains the identification signal (9).

7. Method (40) of claim 6, wherein the step of generating (42) the identification signal comprises modulating at least one carrier frequency using a first identification code (7).

8. Method (40) of claim 7, wherein the step of verifying (45) comprises demodulating the played back sound using the at least one carrier frequency to extract a second identification code.

9. Method (40) of claim 8, wherein the step of verifying (45) comprises comparing the first identification code (7) to the second identification code.

10. Method (40) of one of claims 6-9, wherein the step of combining (43) comprises adding the audio signal (8) and the identification signal (9).

11. System (1) of one of claims 1-5 or method (40) of one of claims 6-10, wherein the audio signal (8) and the identification signal (9) differ in frequency and/or wherein the power of the identification signal (9) is below the power of the audio signal (8).

12. System (1) of one of claims 1-5 or method (40) of one of claims 6-10, wherein the identification signal (9) is preceded by a preamble and/or succeeded by a postamble.

13. System (1) of one of claims 1-5 or method (40) of one of claims 6-10, wherein one or more redundant bits are added to the first identification code (7).

14. System (1) of one of claims 2-5 or method (40) of one of claims 7-10, wherein a warning indication is provided if the verification that the played back sound contains the identification signal (9) fails.

15. Computer program comprising computer executable instructions which, when executed by a computer, cause the computer to perform a method according to one of claims 6-14.
